# EUROPEAN PATENT APPLICATION

(11) **EP 1 662 309 A2**
(43) Date of publication of application: **31.05.2006**
(21) Application number: 05025241.0
(22) Date of filing: 18.11.2005
(51) Int. Cl.: G03B 21/00

(54) **Projection apparatus**

(30) Priority: 26.11.2004 CN 200410095642
(71) Applicant: ASUSTeK Computer Inc., Peitou, Taipei City (TW)
(72) Inventor: Chen, Yi-Jen, Lutzhou City Taipei County (TW)
(74) Representative: TER MEER - STEINMEISTER & PARTNER GbR

(57) **Abstract**

A projection apparatus. A support pedestal is slidably disposed on a base. An optical engine is disposed on the support pedestal. An alignment mechanism is disposed on the base and connected to the support pedestal, adjusting the position of the optical engine with respect to the base. The alignment mechanism includes a fixed pedestal, an adjustment screw, a nut, and a resilient member. The fixed pedestal is fixed to the base. The nut is connected to the support pedestal and slidably disposed on the base. The adjustment screw is rotatably disposed in the fixed pedestal and nut and engages the nut. The resilient member is disposed between the fixed pedestal and the nut to provide resilience to the fixed pedestal and nut, such that the adjustment screw abuts the nut.

## Description

### BACKGROUND

The invention relates to projection apparatuses, and in particular to projection apparatuses consistently maintaining precise positioning or focus of optical engines thereof.

In a rear-projection television, an optical engine is often fixed to a support pedestal. The optical engine and the support pedestal are disposed in a casing, and the position of the optical engine can be adjusted by an alignment mechanism.

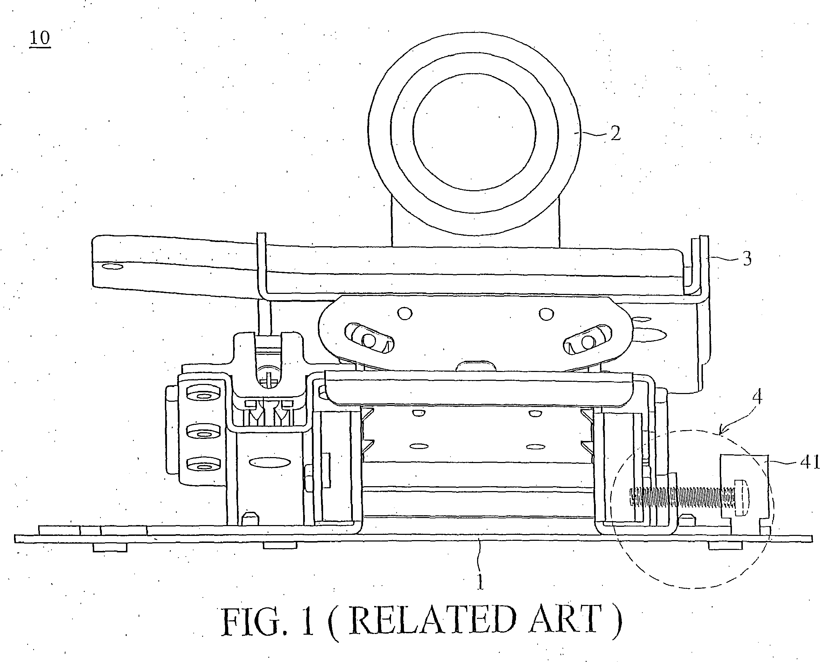

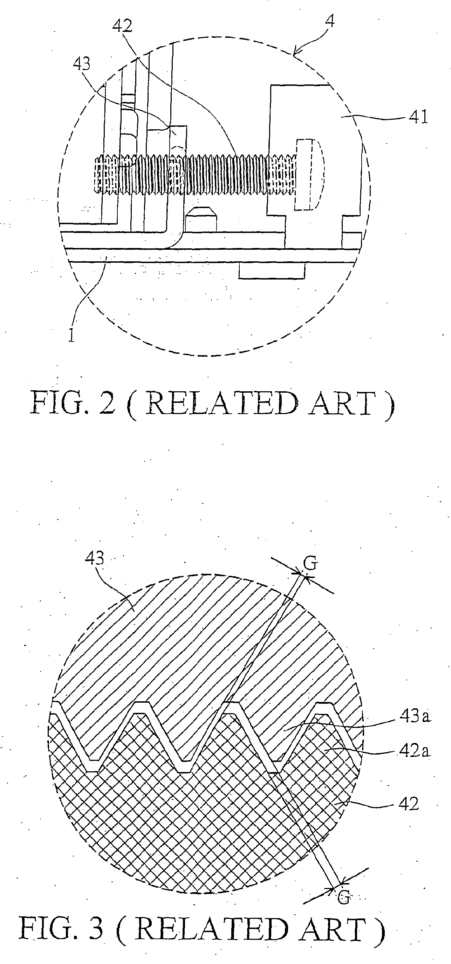

Referring to FIG. 1, a conventional rear-projection television 10 includes a casing (not shown), a base 1, an optical engine 2, a support pedestal 3, and an alignment mechanism 4. The optical engine 2 is fixed to the support pedestal 3 slidably disposed -on the base 1. As shown in FIG. 1 and FIG. 2, the alignment mechanism 4 comprises a fixed pedestal 41, an adjustment screw 42, and a nut 43. The fixed pedestal 41 is fixed to the base 1. The nut 43 is connected to the support pedestal 3 and slidably disposed on the base 1. The adjustment screw 42 is rotatably disposed in the fixed pedestal 41 and the nut 43. Specifically, the outer threads of the adjustment screw 42 engage the inner threads of the nut 43. The adjustment screw 42 can only rotate in the fixed pedestal 41 and not move with "respect to the fixed pedestal 41.

After the base 1, optical engine 2, support pedestal 3, and alignment mechanism 4 are disposed in the casing, the positioning or focusing adjustment of the optical engine 2 must be performed. As shown in FIG. 2, by turning the adjustment screw 42 from the exterior of the fixed pedestal 41, the nut 43 and support pedestal 3 move horizontally with respect to the base 1. The positioning or focusing adj ustment of the optical engine 2 is thus accomplished.

Nevertheless, as shown in FIG. 3, gaps G often exist between the outer threads 42a of the adjustment screw 42 and the inner threads 43a of the nut 43, adversely affecting positioning or focusing performance of the optical engine 2. For example, during transportation or assembly of the rear-projection television 10, vibration can be created and directly transmitted to the support pedestal 3. At this point, minor displacement of the optical engine 2 with respect to the casing may occur due to the gaps G. The positioning or focusing of the optical engine 2 is thus inaccurate. Accordingly, after the rear-projection television 10 is fixed,' the optical engine 2 thereof again requires positioning adjustment, thereby increasing assembly time and labor work.

Moreover, although fixing glue can be filled between the adjustment screw 42 and the nut 43 and between the adjustment screw 42 and the fixed pedestal 41 after the positioning or focusing adjustment of the optical engine 2 is complete, the process of filling the fixing glue is complicated and time-consuming. Additionally, stress can occur after solidification of the fixing glue. The stress and gaps G cause minor displacement of the optical engine 2 with respect to the casing, thereby causing inaccurate positioning or focusing of the optical engine 2. Furthermore, if the optical engine 2 requires repositioning, the fixing glue may cause difficulty therein.

### SUMMARY

Accordingly, an exemplary embodiment of the invention provides a projection apparatus comprising a base, a support pedestal, an optical engine, and an alignment mechanism. The support pedestal is slidably disposed on the base. The- optical engine is disposed on the support pedestal. The alignment mechanism is disposed on the base and connected to the support pedestal, adjusting the position of the optical engine with respect to the base. The alignment mechanism comprises a fixed pedestal, an adjustment screw, a nut, and a resilient member. The fixed pedestal is fixed to the base. The nut is connected to the support pedestal and slidably disposed on the base. The adjustment screw is rotatably disposed in the fixed pedestal and nut and engages the nut. The resilient member is disposed between the fixed pedestal and the nut to provide resilience to the fixed pedestal and nut, such that the adjustment screw abuts the nut.

In an embodiment of the projection apparatus, the resilient member comprises a spring.

In an embodiment of the projection apparatus, the projection apparatus comprises a rear-projection television.

### DESCRIPTION OF THE DRAWINGS

The invention can be more fully understood by reading the subsequent detailed description and examples with references made to the accompanying drawings, wherein:
FIG. 1 is a schematic view of the inner structure of a conventional rear-projection television;
FIG. 2 is a partial enlarged view of the alignment mechanism of the rear-projection television of FIG. 1;
FIG. 3 is a partial enlarged view of FIG. 2;
FIG. 4 is a schematic view of the inner structure of the projection apparatus of a first embodiment of the invention;
FIG. 5 is a partial enlarged view of the alignment mechanism of the projection apparatus of FIG. 4;
FIG. 6 is a partial enlarged view' of FIG. 5;
FIG. 7 is a schematic view of the inner structure of the projection apparatus of a second embodiment of the invention;
FIG. 8 is a partial enlarged view of the alignment mechanism of the projection apparatus of FIG. 7; and
FIG. 9 is a partial enlarged view of FIG. 8.

### DETAILED DESCRIPTION

### First embodiment

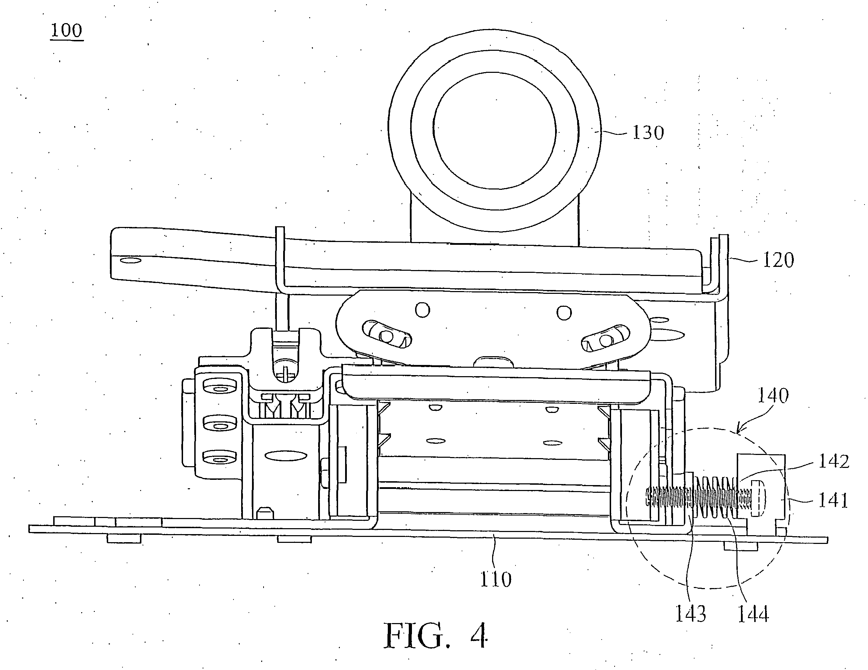

Referring to FIG. 4, the projection apparatus 100 of this embodiment includes a base 110, a support pedestal 120, an optical engine 130, and an alignment mechanism 140.

As shown in FIG. 4, the support pedestal 120 is slidably disposed on the base 110, and the optical engine 130 is disposed on the support pedestal 120.

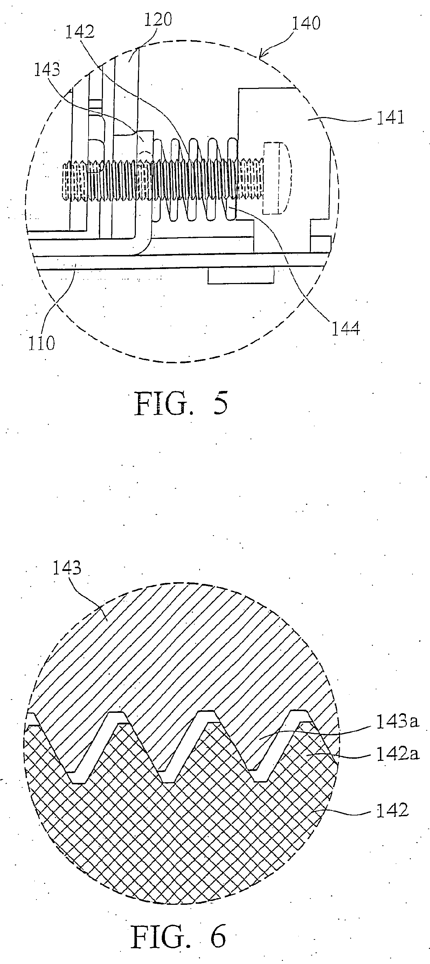

As shown in FIG. 4 and FIG. 5, the alignment mechanism 140 is disposed on the base 110 and connected to the .support pedestal 120 for adjusting the position of the optical engine 130 with respect to the base 110. Specifically, the alignment mechanism 140 includes a fixed pedestal 141, an adjustment screw 142, a nut 143, and a resilient member 144. The fixed pedestal 141 is fixed to the base 110 for supporting the adjustment screw 142. The nut 143 is connected to the support pedestal 120 and slidably disposed on the base 110. The adjustment screw 142 is rotatably disposed in the fixed pedestal 141 and nut 143. Specifically, as shown in FIG. 6, the outer threads 142a of the adjustment screw 142 engage the inner threads 143a of the nut 143. The adjustment screw 142 can only rotate in the fixed pedestal 141 and not move with respect thereto. The resilient member 144 is disposed between the fixed pedestal 141 and the nut 143 for providing resilience to the fixed pedestal 141 and nut 143. In this, embodiment, the resilient member 144 may be a spring pre-compressed and disposed between the fixed pedestal 141 and the nut 143.

When positioning or focusing adjustment of the optical engine 130 is performed, the adjustment screw 142 can be turned from the exterior (from right side) of the fixed pedestal 141, thereby horizontally moving the nut 143 and support pedestal 120 with respect to the base 110. Specifically, as the resilient member 144 pre-compressed and disposed between the fixed pedestal 141 and the nut 143 provides pushing force, the inner threads 143a of the nut 143 abut the outer threads 142a of the adjustment screw 142 in the same direction (leftward), as shown in FIG. 6. Thus, the gaps G, as shown in FIG. 3, do not occur to adversely affect the positioning or focusing adjustment of the optical engine. Accordingly, vibrations created during transportation or assembly of the projection apparatus 100 do not affect the position of the optical engine 130 with respect to the base 110. Precise positioning or focusing of the optical engine 130 is thus maintained.

### Second embodiment

Elements corresponding to those in the first embodiment share the same reference numerals.

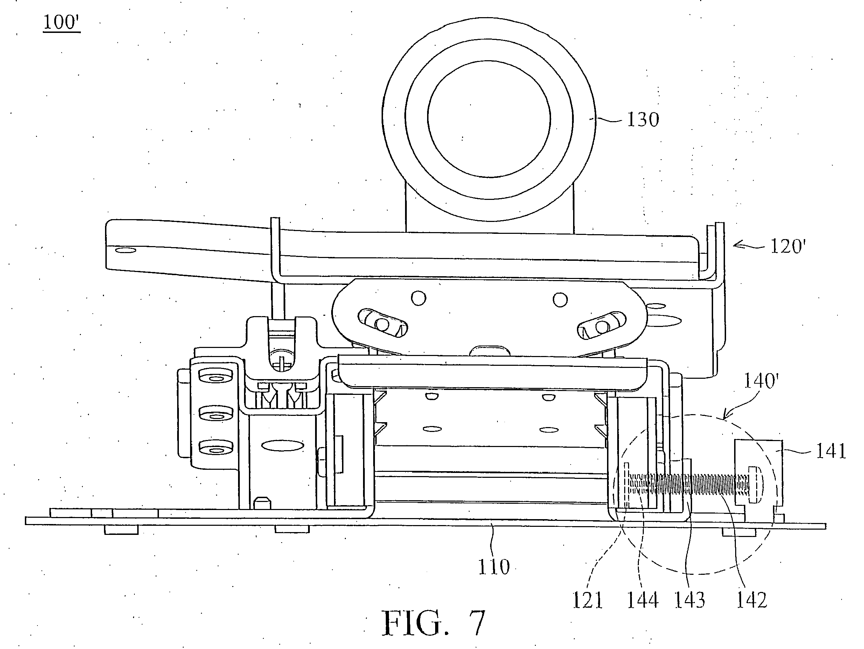

Referring to FIGs. 7, 8, and 9, this embodiment differs from the first embodiment in placement of the resilient member 144. The resilient member 144 of the alignment mechanism 140' of the projection apparatus 100' is disposed between the adjustment screw 142 and a retardant portion 121 of the support pedestal 120'. In this embodiment, the resilient member 144 may be a spring pre-compressed and connected between the adjustment screw 142 and the retardant portion 121 of the support pedestal 120'. Structure, disposition, and function of other elements of the projection apparatus 100' are the same as those of the projection apparatus 100, and explanation thereof is omitted for simplicity.

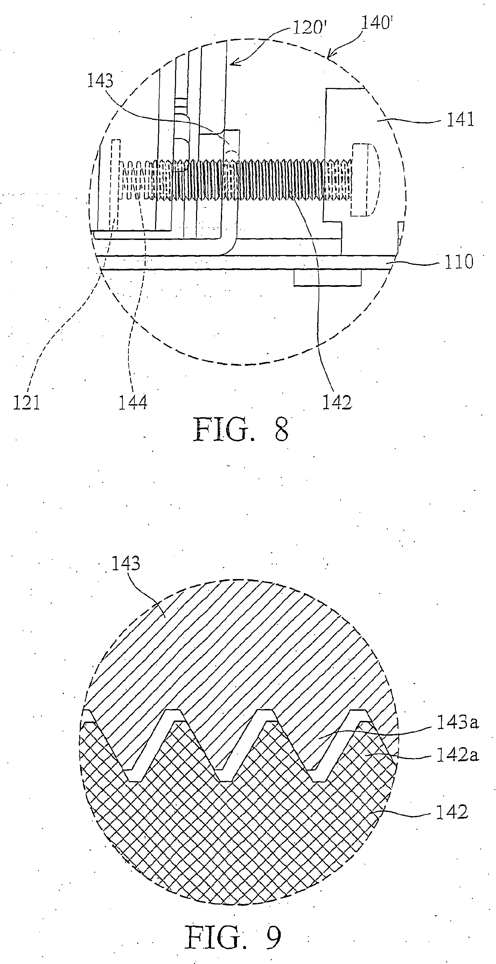

Similarly, during positioning or focus adjustment of the optical engine 130, the adjustment screw 142 can be turned from the exterior (right side) of the fixed pedestal 141, thereby horizontally moving the nut 143 and support pedestal 120' with respect to the base 110. Specifically, as the resilient member 144 pre-compressed and connected between the adjustment screw 142 and the retardant portion 121 of the support pedestal 120' provides pushing force, the inner threads 143a of the nut 143 abut the outer threads 142a of the adjustment screw 142 in the same direction (leftward), as shown in FIG. 9. Thus, the gaps G shown in FIG. 3 do not occur to adversely affect the positioning or focus adjustment of the optical engine. Accordingly, vibrations created during transportation or assembly of the projection apparatus 100' do not affect the position of the optical engine 130 with respect to the base 110. Precise positioning or focus of the optical engine 130 is thus maintained.

In conclusion, the present projection apparatus can consistently maintain precise positioning or focus of the optical engine thereof, thereby reducing labor and time required for repeated positioning or adjustment of the optical engine.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A projection apparatus, comprising:
a base;
a support pedestal slidably disposed on the base;
an optical engine disposed on the support pedestal; and
an alignment mechanism disposed on the base and connected to the support pedestal to adjust the position of the optical engine with respect to the base, wherein the alignment mechanism comprises a fixed pedestal, an adjustment screw, a nut, and a resilient member, the fixed pedestal is fixed to the base, the nut is connected to the support pedestal.and slidably disposed on the base, the adjustment screw is rotatably disposed in the fixed pedestal and nut and engages the nut, and the resilient member is disposed between the fixed pedestal and the nut to provide resilience to the fixed pedestal and nut, such that the adjustment screw abuts the nut.

2. The projection apparatus as claimed in claim 1, wherein the resilient member comprises a spring.

3. The projection apparatus as claimed in claim 1, wherein the projection apparatus comprises a rear-projection television..

4. A projection apparatus, comprising:
a base;
a support pedestal slidably disposed on the base;
an.optical engine disposed on the support pedestal; and
an alignment mechanism disposed on the base and connected to the support pedestal to adjust the position of the optical engine with respect to the base, wherein the alignment mechanism comprises a fixed pedestal, an adjustment screw, a nut, and a resilient member, the fixed pedestal is fixed to the base, the nut is connected to the support pedestal and slidably disposed on the base, the adjustment screw is rotatably disposed in the fixed pedestal and nut and engages the nut, and the resilient member is disposed between the adjustment screw and the support pedestal to provide resilience to the adjustment screw, such that the adjustment screw abuts the nut.

5. The projection apparatus as claimed in claim 4, wherein the resilient member comprises a spring.

6. The projection apparatus as claimed in claim 4, wherein the projection apparatus comprises a rear-projection television.

7. A projection apparatus, comprising:
a base;
a support pedestal slidably disposed on the base;
an optical engine disposed on the support pedestal; and
an alignment mechanism disposed on the base and connected to the support pedestal to adjust the position of the optical engine with respect to the base, wherein the alignment mechanism comprises a resilient member by which the position of the optical engine with respect to the base is adjusted.

8. The projection apparatus as claimed in claim 7, wherein the alignment mechanism further comprises a fixed pedestal, an adjustment screw, and a nut, the fixed pedestal is fixed to the base, the nut is connected to the support pedestal and slidably disposed on the base, the adjustment screw is rotatably disposed in the fixed pedestal and nut and engages the nut, and the resilient member is disposed between the fixed pedestal and the nut to provide resilience to the fixed pedestal and nut, such that the adjustment screw abuts the nut.

9. The projection apparatus as claimed in claim 7, wherein the alignment mechanism further comprises a fixed pedestal, an adjustment screw, and a nut, the fixed pedestal is fixed to the base, the nut is connected to the support pedestal and slidably disposed on the base, the adjustment screw is rotatably disposed in the fixed pedestal and nut and engages the nut, and the resilient member is disposed between the adjustment screw and the support pedestal to provide resilience to the adjustment screw, such that the adjustment screw abuts the nut.

10. The projection apparatus as claimed in claim 7, wherein the resilient member comprises a spring.

11. The projection apparatus as claimed in claim 7, wherein the projection apparatus comprises a rear-projection television.
